Europäisches Patentamt

European Patent Office

Office européen des brevets

(11) Publication number: **0 122 783**
**B1**

(12) **EUROPEAN PATENT SPECIFICATION**

(45) Date of publication of patent specification: **02.11.89**

(51) Int. Cl.⁴: **G 02 B 5/32, G 02 B 26/10**

(21) Application number: **84302517.2**

(22) Date of filing: **13.04.84**

(54) **Method and apparatus for light beam scanning using a hologram.**

(30) Priority: **13.04.83 JP 66145/83**

(43) Date of publication of application:
**24.10.84 Bulletin 84/43**

(45) Publication of the grant of the patent:
**02.11.89 Bulletin 89/44**

(84) Designated Contracting States:
**DE FR GB**

(56) References cited:
**EP-A-0 041 845**

**IBM TECHNICAL DISCLOSURE BULLETIN, vol.
25, no. 7B, December 1982, pages 3702-3703,
New York, US; C.C. IH et al.: "Method for
eccentricity compensation for holographic
scanners"**

**IBM TECHNICAL DISCLOSURE BULLETIN, vol.
23, no. 9, February 1281, pages 4255-4256, New
York, US; L.D. DICKSON: "Correction of
astigmatism for off-axis reconstruction beam
holographic deflector"**

(73) Proprietor: **FUJITSU LIMITED
1015, Kamikodanaka Nakahara-ku
Kawasaki-shi Kanagawa 211 (JP)**

(72) Inventor: **Yamagishi, Fumio
40-1-5-541, Oya
Ebina-shi Kanagawa 243-03 (JP)**
Inventor: **Hasegawa, Shinya
Fukuju kopo 202 1-16-15, Haramachida
Machida-shi Tokyo 194 (JP)**
Inventor: **Ikeda, Hiroyuki
1-12-1208, Wakabadai Asahi-ku
Yokohama-shi Kanagawa 241 (JP)**

(74) Representative: **Sunderland, James Harry et al
HASELTINE LAKE & CO Hazlitt House 28
Southampton Buildings Chancery Lane
London WC2A 1AT (GB)**

# EP 0 122 783 B1

**Description**

The present invention relates to light beam scanning, more particularly, it relates to a method for constructing a hologram having interference fringes on a transparent disk, and to a method and apparatus for scanning a light beam during reconstruction of such a hologram. The present invention is advantageous for use in a laser printer of a computer system.

Recently, laser printers are becoming widely used as output apparatus in a computer system, because of their high speed and high-quality printing. A laser printer is mainly constituted by a laser beam source producing a coherent light beam, for example, an He-Ne gas laser or a semiconductor laser, an ultrasonic light modulator, a multi-faceted rotating mirror, an fθ lens, and a drum. However, the constitution of these elements, particularly the multi-faceted rotating mirror, requires a highly-complex structure and high precision assembly during manufacture. As a result, laser printers are very expensive.

Attempts have been made by, for example, Xerox Corporation, Nippon Electric Co., Ltd., and Fujitsu Limited, to solve the above-mentioned problems by using a hologram instead of the multi-faceted rotating mirror in the laser printer.

However, although these proposals can achieve a simplified structure and assembly, and also reduce costs, and although they can facilitate its use as a bar-code reader in a so-called point of sales (POS) system, sufficient precision has not been obtained to enable a hologram to be used in a laser printer, compared with the conventional multi-faceted rotating mirror. This will be explained in detail hereinafter.

An article by Ih et al in IBM Technical Disclosure Bulletin Vol. 25 No. 7B, December 1982, discloses a method for eccentricity compensation for holographic scanners in which a hologram disk is used with an auxiliary reflector, having a spherical surface, which converts a normally curved scan line to a straight scan line. The disk has a hologram obtained by using a reference recording source R which originates on the axis of rotation of the disk at a point approximately symmetric to the virtual image point of an object wave reflected from the spherical surface of the auxiliary reflector. Under conjugate readout conditions, using the auxiliary reflector, a demagnification of radial errors, resulting from radial shifts of the hologram relative to a playback beam, occurs.

Apparently the hologram will include interference fringes having a variation of spatial frequency with a minimum of rate of change of spatial frequency.

Apparently also, the zone of incidence of the playback beam on the hologram may include this minimum.

EP—A—0 041 845 by the present applicant discloses a light scanning apparatus using a hologram disk in which a laser source provides a reconstruction beam of a selectable wavelength which may be different from that of object and reference light beams used in construction of the hologram disk.

The following combinations of object and reference light beams (waves) are disclosed: spherical object wave and planar reference wave; cylindrical object wave and spherical reference wave; or diverging spherical object wave and converging spherical reference wave. None of these combinations apparently gives rise to interference fringes having a variation of spatial frequency with a minimum of rate of change of spatial frequency.

According to one aspect of the present invention, there is provided an apparatus for producing a scanning light beam, comprising:

a rotatable disk having a hologram obtained by:

irradiating a reference wave light beam as a construction wave light beam having a diverging spherical wave front, from a first point light source located at a predetermined distance from the disk on the rotation axis thereof;

irradiating an object wave light beam of a first wavelength as a construction wave light beam having a diverging spherical wave front, from a second point light source located at predetermined distances from the disk and from the rotation axis;

and causing interference between said reference wave light beam and said object wave light beam on said disk so as to form interference fringes on the disk;

the apparatus further comprising: a light beam source, operable to generate a reconstruction beam; and rotating means for rotating the disk to produce a scanning light beam;

wherein said interference fringes have a spatial variation of spatial frequency including a minimum of rate of change of spatial frequency; and wherein

said light beam source is operable to generate the reconstruction beam with a second wavelength longer than the first wavelength, the first wavelength and the second wavelength being such that a directly-usable straight-line scanning light beam is obtained directly from the disk, and the reconstruction beam being directed to points on the disk at or in the vicinity of the minimum rate of change of spatial frequency.

According to another aspect of the present invention, there is provided a method of producing a scanning light beam comprising:

forming a hologram on a rotatable disk by:

irradiating a reference wave light beam as a construction wave light beam having a diverging spherical wave front, from a first point light source located at a predetermined distance from the disk on the rotation axis thereof;

2

EP 0 122 783 B1

irradiating an object wave light beam of a first wavelength as a construction wave light beam having a diverging spherical wave front, from a second point light source located at predetermined distances from the disk and from the rotation axis;

causing interference between said reference wave light beam and said object wave light beam on said disk, so as to form interference fringes on the disk;

directing a reconstruction beam onto the disk; and rotating the disk to produce the scanning light beam;

wherein said interference fringes have a spatial variation of spatial frequency, said variation including a minimum rate of change of spatial frequency; and wherein

the reconstruction beam has a second wavelength longer than the first wavelength, the first wavelength and the second wavelength being such that a directly-usable straight-line scanning light beam is obtained directly from the disk, the reconstruction beam being directed to a point on the disk at or in the vicinity of the minimum rate of change of spatial frequency.

An embodiment of the present invention can provide a hologram having sufficient precision to make it capable of use in a laser printer.

An embodiment of the present invention can also provide a method for constructing a hologram having improved interference fringes.

An embodiment of the present invention can also provide a method and apparatus for scanning a laser light beam during a reconstruction of a hologram used as a laser printer.

Thus, in accordance with the method and apparatus of the present invention, it is possible to use a hologram in a laser printer without the necessity for a complex structure and assembly, and without the requirement of a high precision during manufacture.

Reference is made, by way of example, to the accompanying drawings in which:—

Figure 1 is a schematic illustration of a light beam scanning apparatus using a conventional hologram disk in a laser printer;

Figs. 2 to 4 are schematic illustrations of a conventional pattern of interference fringes of the holograms used on the hologram disk shown in Fig. 1;

Fig. 5 illustrates the allowance width for fluctuation of a scanning line when in use in a laser printer;

Figs. 6 and 7 are schematic illustrations explaining the underlying principle of a method for scanning a laser beam according to an embodiment of the present invention;

Fig. 8 is a schematic illustration explaining a method for constructing a hologram according to one embodiment of the present invention;

Fig. 9A is a schematic illustration of the pattern of interference fringes of the hologram according to the embodiment shown in Fig. 8;

Fig. 9B illustrates a schematic cross sectional view of Fig. 8;

Fig. 10 is a graph of the relationship between the spatial frequency and the incident position of the reconstruction beam expressed as distance from the center of the hologram disk, for the embodiment shown in Fig. 8 and for the conventional method as shown in Figs. 2 to 4;

Fig. 11 is a graph of the effect of one example of an embodiment of the present invention;

Fig. 12 is a schematic illustration explaining deflection of the surface of the hologram disk;

Fig. 13 is a schematic illustration explaining a method for constructing a hologram according to another embodiment of the present invention.

Fig. 14 is a graph of the relationship between the change in the diffraction angle and the change in the hologram disk angle orientated due to wobble in comparison with the conventional method using the multi-faceted rotating mirror; and

Fig. 15 is a schematic illustration of a light beam scanning apparatus according to an embodiment of the present invention when used as a laser printer.

Before describing the preferred embodiments, an explanation will be given of a light beam scanning apparatus (hereinafter called hologram scanner) using a conventional hologram disk, and of a conventional method for constructing a hologram.

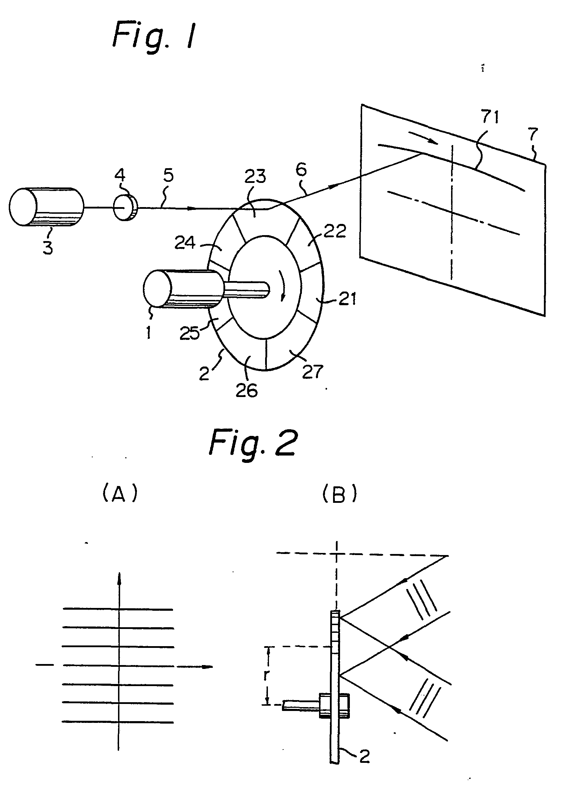

Referring to Fig. 1, the hologram scanner is mainly constituted by a motor 1, a hologram disk 2, a laser beam source 3, and a lens 4. The hologram disk 2 consists of transparent material and is rotated at high speed by the motor 1. On the hologram disk 2, several holograms (21 to 27) having the same predetermined pattern are formed. A reconstruction laser beam 5 generated from the laser source 3 is incident on a hologram (e.g., 23) through the lens 4, and diffracted by the interference fringes of the hologram. The light beam diffracted by the interference fringes forms a scanning beam 6, and the scanning beam 6 scans on the screen 7 according to the rotation of the hologram disk 2 (in the case of the laser printer, a surface of a drum is scanned) in the direction shown by an arrow along a scanning line 71.

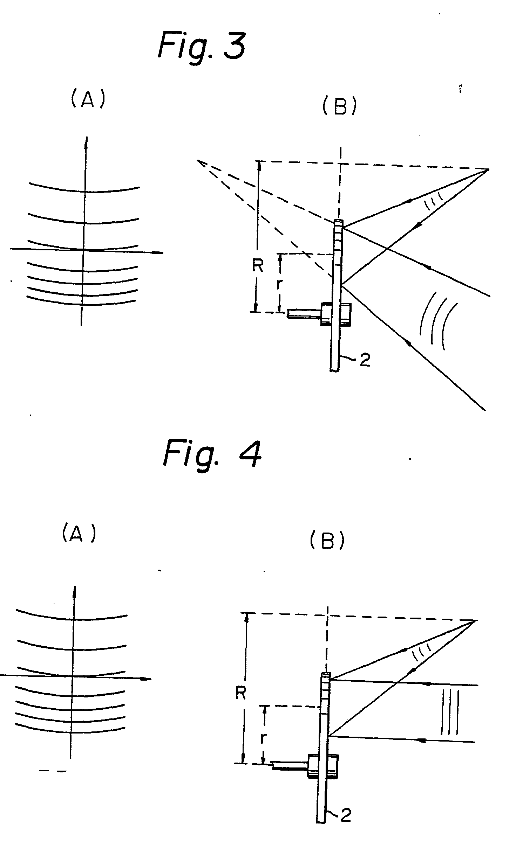

Referring to Figs. 2 to 4, Fig. 2(A) illustrates the pattern of the interference fringes, and (B) illustrates a method for providing such interference fringes on the hologram disk 2. This method was disclosed by Xerox Corporation (UK Patent Application GB 2024449A, Charles J. Kramer). As is obvious from the drawings, the hologram is formed by interference fringes having the same interval, as shown in (A). Such a hologram is obtained by the interference of two reference wave light beams each having a plane wave front. Referring to Fig. 3, the method shown in this Figure was disclosed by Nippon Electric Co. (Japanese Unexamined Patent Publication No. 54-104849). Here, the hologram is formed by interference fringes

3

which increase in interval in the direction shown by the arrow line in (A). Such a hologram is obtained by the interference of two reference wave light beams, one having a diverging spherical wave surface and the other a converging spherical wave surface, as shown in (B). Referring to Fig. 4, this method was disclosed by Fujitsu Limited (Japanese Unexamined Patent Publication No. 57-2018). In this case, the hologram is formed by a similar pattern of interference fringes to that in Fig. 3(A). However, such a hologram is obtained by the interference of two reference wave light beams, one having a diverging spherical wave front and the other a plane wave front, as shown in (B).

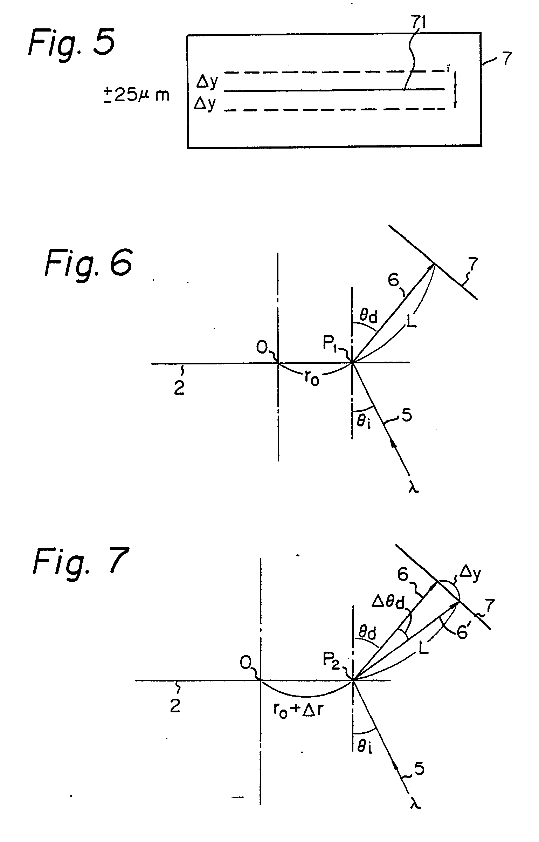

However, when the above-mentioned conventional holograms are used in the laser printer as shown in Fig. 1, the position of the scanning line 71 obtained by the scanning beam 6 on the screen 7 fluctuates at every scan of the scanning beam 6 as the hologram disk rotates. This effect stems from two factors first, eccentricity (displacement) of the axis between the motor and the hologram disk, and second, eccentricity (angular deflection) of the axis (wobble) caused by motor vibration during rotation. This problem becomes very important when the hologram scanner is applied to a laser printer, as the laser printer requires a high precision for the scanning position of the scanning beam. Namely, as shown in Fig. 5, the precision for the position of the scanning line 71 (scanning track) must be, in general, within $\pm 25$ µm, when in use as a laser printer. This means that the eccentricity (displacement) of the axis between the motor 1 and the hologram disk 2 must be less than $\pm 5$ to 6 µm.

However, it is impossible to achieve this position precision for the scanning line for the above-mentioned conventional hologram, particularly for the two conventional holograms shown in Figs. 3 and 4, for the following reasons.

As is obvious from the drawings shown in Figs. 3 and 4, in the area of the hologram irradiated by the reconstruction beam 5, a spatial frequency (number of interference fringes per unit length (mm)) monotonically decreases or increases in a radial direction, as shown in (A). When the spatial frequency monotonically decreases or increases, a diffraction angle obtained between the hologram and the scanning beam 6 also monotonically decreases or increases. Accordingly, when eccentricity of the axis between the motor 1 and the hologram disk 2 occurs, the diffraction angle changes in accordance with such axis eccentricity and, consequently, fluctuation occurs in the irradiated scanning beam 6.

It is not practical to maintain the eccentricity to within $\pm 5$ to 6 µm by improving the mounting between the motor shaft and the hologram disk, by improving the eccentricity caused by motor vibration, and by improving the positioning of the pattern of the interference fringes of the hologram. In another attempt to solve the above-mentioned problems, as shown by the hologram in Fig. 2, it is necessary to provide a compensating optical system, for example, a f$\theta$ lens (not shown). However, this compensating optical system is very expensive, and necessitates a complex structure.

A method for constructing a hologram having improved interference fringes, and a method and apparatus for scanning the laser beam during a reconstruction of such a hologram according to an embodiment of the present invention, will now be described.

Referring to Fig. 6, $\theta_i$ is the incident angle of a reconstruction beam 5 irradiated from the laser beam source 3, and $\theta_d$ is a diffraction angle obtained by a scanning beam 6. Reference O shows the center of a hologram disk 2. The reconstruction beam 5 strikes a point $P_1$ on the hologram, at a distance $r_0$ from the center O. The scanning beam 6 diffracted by the diffraction angle $\theta_d$ is irradiated to a screen 7 over a distance L from the hologram disk 2.

The following formula is obtained from the known laws of diffraction,

$$\sin \theta_d = -\sin \theta_i + f(r_0)\lambda \tag{1}$$

where,

$\lambda$ is the wavelength of the reconstruction beam, $f(r_0)$ is the spatial frequency at a point at distance $r_0$.

Figure 7 illustrates a case in which the reconstruction beam 5 is deflected a short distance $\Delta r$ from the distance $r_0$. In this case, since the incident position $P_1$ of the reconstruction beam 5 is changed to a point $P_2$ at distance $r_0 \pm \Delta r$, $f(r_0)$ changes to $f(r_0 \pm \Delta r)$ and so the diffraction angle $\theta_d$ changes to an angle $\theta_d + \Delta\theta_d$. Therefore, the position of the scanning line 6' on the screen 7 changes by a distance $\Delta y$, compared with the position as shown in Fig. 6.

From the above-mentioned diffraction law (1), the following formula is obtained,

$$\sin(\theta_d \pm \Delta\theta_d) = -\sin \theta_i + f(r_0 \pm \Delta r)\lambda \tag{2}$$

When the fluctuation of the scanning line on the screen 7 is given by $\Delta y$, the following approximation is obtained,

$$\Delta y \fallingdotseq L \cdot \Delta\theta_d \tag{3}$$

For the laser printer, it is necessary for $\Delta y$ to be maintained within $\pm 25$ µm, as mentioned above, in order to obtain high quality printing.

If, for example a laser printer prints at 240 dots per inch, the diameter of one dot is approximately 105.8 µm. Accordingly, the fluctuation $\Delta y$ must be within one quarter dot (approximately, $\pm 26$ µm).

From the above-mentioned formulae (1), (2), and (3), the following approximate formula is obtained,

$$\Delta y \doteq \pm \frac{\lambda \cdot L \cdot f'(r_0)}{\cos \theta_d} \cdot \Delta r \tag{4}$$

where,

$f'(r_0)$ is the differential with respect to r of the spatial frequency.

As can be understood from formula (4), to minimize $\Delta y$ against the deviation $\Delta r$, the term $f'(r_0)$ must be as close to zero as possible. Accordingly, if

$$f'(r_0)=0 \tag{5}$$

it is possible to obtain a minimized deflection of a scanning line for use in a hologram scanner, based on the above formula (5).

As explained above, the principal aspect of the present invention is obtained by a solution to the formula (5).

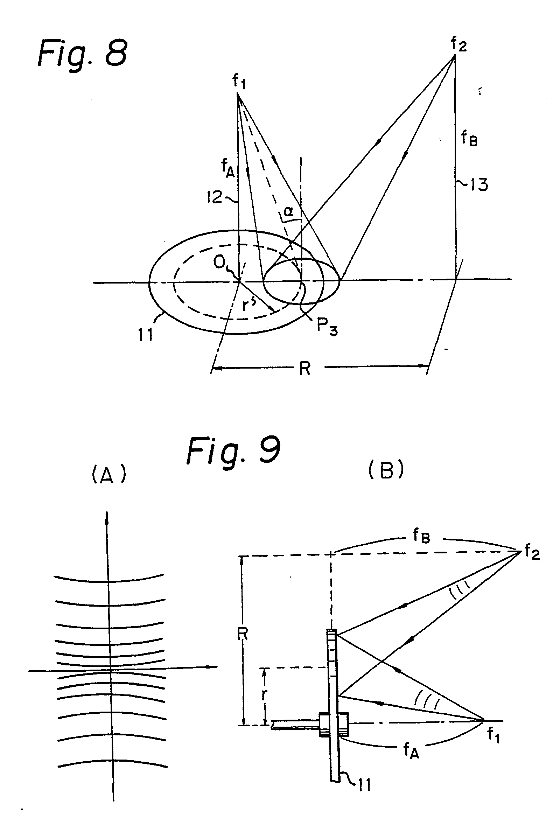

Referring to Fig. 8, reference numeral 11 shows a transparent glass, for example, glass disk, being provided with a hologram of a predetermined pattern on the surface thereof. The hologram is obtained by interference between a reference wave light beam having a diverging spherical wave front with focal point $f_1$ as a first point light source, located at a predetermined distance $f_A$ on the center axis 12 of the disk 11, and an object wave light beam having a similar diverging spherical wave front of a focal point $f_2$ as a second point light source, located on the axis 13 at a predetermined distance $f_B$ from a point a distance R from the center axis of the disk 11.

The interference fringes obtained by this method are illustrated in Fig. 9(A). As is obvious from the drawing, the interference fringes are fine (closely spaced) toward the center and coarse (widely spaced) toward both inner and outer sides of the hologram. Accordingly, the center of the hologram has a large spatial frequency and both the inner and outer sides of the hologram have a small spatial frequency.

In the hologram disk 11 having improved interference fringes obtained from the above method, the reconstruction laser beam is incident upon the hologram at a distance r from the center O of the hologram disk 11.

In this case, the spatial frequency f at a distance r is obtained by the following formula,

$$f=\frac{1}{\lambda_1} \left( \frac{r}{\sqrt{f_A{}^2+r^2}} + \frac{R-r}{\sqrt{f_B{}^2+(R-r)^2}} \right) \tag{6}$$

where, $\lambda_1$ is a construction beam wavelength. The formula (6) is differentiated with respect to r, and the condition $f'(r)=0$, i.e., the condition of an extreme (stationary) value of the spatial frequency, is obtained by the following formula,

$$\frac{f_A{}^2}{(r^2+f_A{}^2)^{3/2}} = \frac{f_B{}^2}{\{(R-r)^2+f_B{}^2\}^{3/2}} \tag{7}$$

Accordingly, the preferred incident position distance $r_0$ of the reconstruction laser beam is obtained by the distance r sufficient to satisfy the formula (7) (if the distance $r_0$ is fixed, the preferred $f_A$ is chosen so as to satisfy the formula (7)).

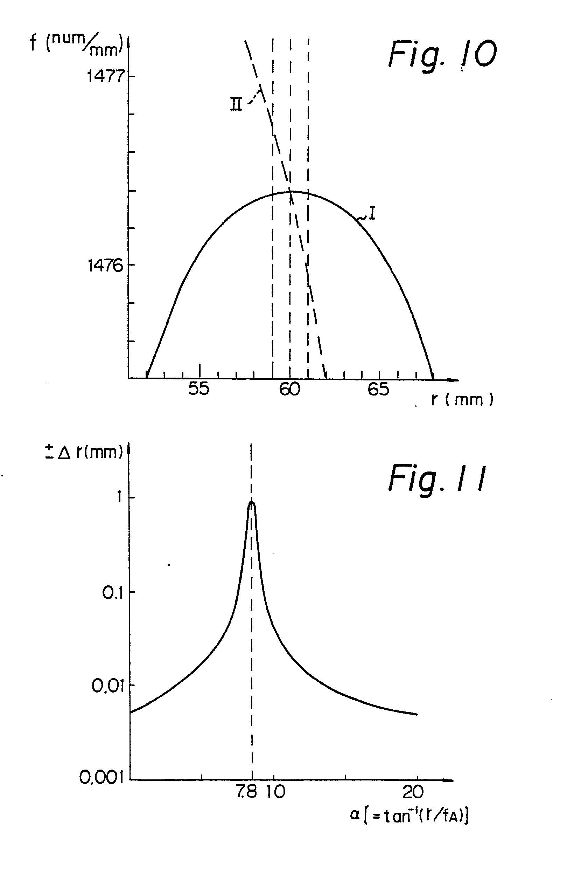

As can be understood from formula (4), when the reconstruction laser beam is directed to the position $P_3$ at the distance $r_0$, even if the actual incident position of the reconstruction beam is slightly shifted from the position $P_3$, since the spatial frequency based on the interference fringes shown in Fig. 9(A) has a maximum as shown in Fig. 10, and the rate of change of spatial frequency is a minimum, there is little fluctuation of the scanning beam diffracted by the hologram on the screen.

Referring to Fig. 10, the longitudinal axis indicates the spatial frequency f per unit mm, and the transverse axis indicates the distance r from the center of the hologram disk. Curve I (solid line) indicates the spatial frequency according to the hologram of the present invention, and curve II (dotted line) indicates that of the prior art. As can be understood from both curves, the stationary value (that is, the maximum) of spatial frequency exists between the distance r=59 mm and r=61 mm from the center of the hologram disk, in this example. Thus it is clear that there is little change of the spatial frequency within this range. Therefore, when the reconstruction laser beam is directed to positions on the disk between the distance r=59 mm and r=61 mm from the center of the hologram disk, since there is little change of the diffraction angle $\theta_d$, there is also little fluctuation of the position of the scanning line on the screen. However, since curve II of the conventional method shows a large change of spatial frequency against distance r from the center of the hologram disk, the change of the diffraction angle $\theta_d$ is also large, and, consequently, there is a large fluctuation of the position of the scanning line on the screen.

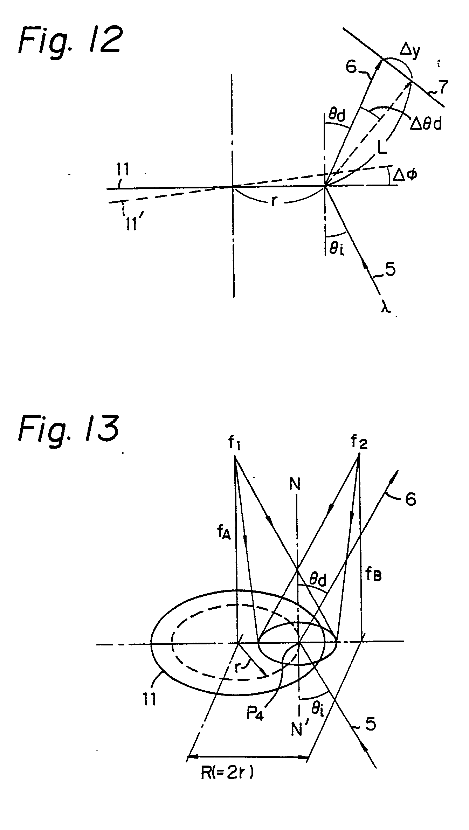

Next, the effect according to this embodiment will be explained. In the example of Figure 11, the hologram was constructed with the following values: $\lambda_1$=488 nm (wavelength of the construction wave laser beam using Argon laser beam), $f_A$=438 mm (the distance from the hologram to the focal point $f_1$),

$f_B$=240 mm (the distance from the transverse axis of the hologram to the focal point $f_2$ of the object wave), and R=233 mm. The wavelength of the reconstruction laser beam (semiconductor laser) was $\lambda_2$=760 nm, and was directed to the position r=60 mm distant from the center of the hologram. When the distance between the hologram disk and the screen was L=468 mm, the effect of the present invention was as shown in Fig. 11. Referring to Fig. 11, the longitudinal axis indicates the allowance value ($\Delta r$) of the eccentricity at the center of the hologram disk, and the transverse axis indicates the incident angle ($\alpha$) of the reference wave (construction wave) laser beam, i.e., $\alpha=\tan^{-1}(r/f_A)$. As the curve clearly shows, at the point $\alpha$=7.8°, i.e., $f_A$=438 mm, r=60 mm, the allowance value ($\Delta r$) of the eccentricity has a peak value ($\Delta r=\pm 1$ mm). Accordingly, to maintain the fluctuation of the scanning line within $\pm 25$ μm when in use in a laser printer, this allowance value of the eccentricity between the motor axis and the center of the hologram disk is sufficient.

As mentioned in the above embodiment, straight line scanning is possible by making the wavelength of the reconstruction laser beam $\lambda_2$ longer than the wavelength of the construction wave laser beam $\lambda_1$.

Another embodiment of the method for constructing the hologram according to the present invention will be explained below.

This embodiment can minimise the effect of not only the eccentricity of the axis (axial displacement) between the motor axis and the center of the hologram disk, but also the change in the hologram disk orientation (angular deflection) due to wobble.

Referring to Fig 12, suppose that the hologram disk 11 is deflected to the orientation 11' by a deflection angle $\Delta\phi$ with respect to the center axis. Then, as shown in Fig. 12, the fluctuation of the scanning line on the screen 7 is $\Delta y$, and the deflection angle of the diffraction angle $\theta_d$ is the angle $\Delta\theta_d$. Also, the incident angle of the reconstruction laser beam of wavelength $\lambda$ is the angle $\theta_i$.

As explained in the first embodiment, the fluctuation of the scanning line $\Delta y$ is given by the formula (3). Accordingly, the permissible deflection angle $\Delta\theta_d$ is obtained from the following calculation,

$$|\Delta\theta_d| < \frac{0.026}{450} \times \frac{180}{\pi} \doteqdot 3.3\times 10^{-3}\ (\text{deg})$$

$$=11.88\ (\text{sec}) \doteqdot 12\ (\text{sec})$$

where, the distance L between the hologram disk and the screen is 450 mm, and the allowance value of the fluctuation of the scanning line is 26 μm.

The above calculation clearly shows that, in the first embodiment, the allowance value of the deflection angle $\Delta\theta_d$ must be within 12 seconds of arc.

The relationship between the angle $\Delta\theta_d$ and the angle $\Delta\phi$ is given by the following first approximate formula,

$$d\theta_d = \pm \left( \frac{\cos\theta_i}{\cos\theta_d} - 1 \right) d\phi \tag{8}$$

As can be understood from the above formula (8), the maximum allowance value of the deflection angle $d\phi$ is obtained when the incident angle $\theta_i$ is equal to the diffraction angle $\theta_d$, to obtain the maximum margin for the allowance value for the deflection of the surface of the hologram disk.

Next, a method for constructing a hologram having improved interference fringes, wherein the incident angle $\theta_i$ is equal to the diffraction angle $\theta_d$, will be explained.

Referring to Fig. 13, as can be seen from formula (6), the incident angle $\theta_i$ and the diffraction angle $\theta_d$ are given by the following formulae,

$$\sin\theta_i = \frac{\lambda_2}{\lambda_1} \frac{r}{\sqrt{f_A^2 + r^2}} \tag{9}$$

$$\sin\theta_d = \frac{\lambda_2}{\lambda_1} \frac{R-r}{\sqrt{f_B^2 + (R-r)^2}} \tag{10}$$

where,
$\lambda_1$ is the wavelength of construction beam of the hologram, and
$\lambda_2$ is the wavelength of the reconstruction beam of the hologram.

As shown above, the condition of maximum margin for the allowance value with respect to eccentricity of the axis is given by formula (7).

Accordingly, the condition in which incident angle $\theta_i$ is equal to the diffraction angle $\theta_d$, and the

condition in which the maximum margin of the eccentricity is given by formula (7), are obtained by the following calculations,

$$f_A = f_B, \quad R = 2r \tag{11}$$

based on formulae (7), (8), (9) and (10).

As formula (11), clearly shows, when the hologram is obtained by interference of the object wave light beam and the reference wave light beam, the object wave light beam having the diverging spherical wave front and the reference wave light beam having the diverging spherical wave front should therefore be provided at a symmetrical position with respect to the normal line N—N' of the surface of the hologram disk, at the incident position $P_4$ of the reconstruction beam 5.

In the first embodiment, since these light beams both having a diverging spherical wave front are provided at an asymmetrical position with respect to the normal line of the surface of the hologram disk, a utilization efficiency of the light beam between the reconstruction beam and the scanning beam of about 15 percent is obtained. This is because the incident angle does not satisfy the so-called Bragg angle condition. However, according to this embodiment, a utilization efficiency of about 75 percent is obtained, since the Bragg angle condition is satisfied by the symmetrical arrangement of both light beams.

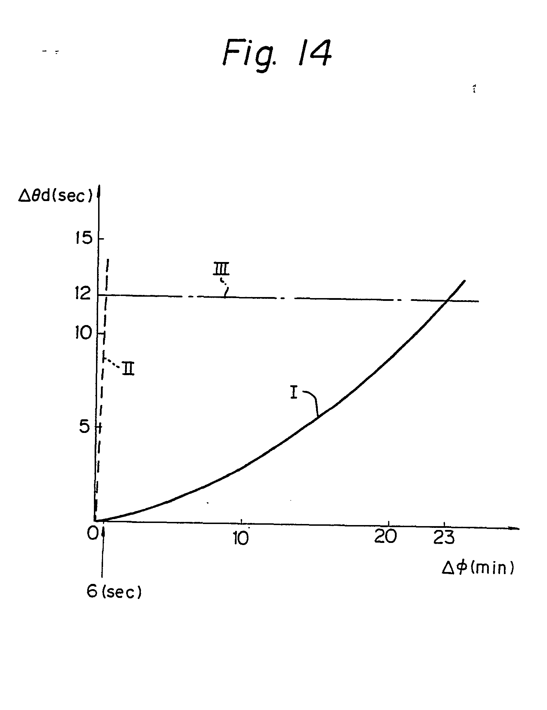

Referring to Fig. 14, the longitudinal axis indicates the deflection angle $\Delta\theta_d$ (sec) of the diffraction angle $\theta_d$, and the transverse axis indicates the deflection angle $\Delta\phi$ (min) of the surface of the hologram disk. Curve I (solid line) indicates the present invention, and curve II (dotted line) indicates the conventional method using a multifaceted rotating mirror. The chain-dotted line III indicates the limitation target value (12 sec) of the angle $\Delta\theta_d$ obtained by calculation. As is obvious from the graph, the allowance value of the deflection angle $\Delta\phi$ for the target value (12 sec) is 23 (min) according to the present invention, while, according to the conventional method, the allowance value of $\Delta\phi$ is only 6 (sec). Accordingly, the allowance value for the deflection angle $\Delta\phi$ can now give a sufficiently large margin.

Next, a method and apparatus for scanning the laser beam using a hologram having improved interference fringes, according to the present invention, and used as a laser printer, will be explained.

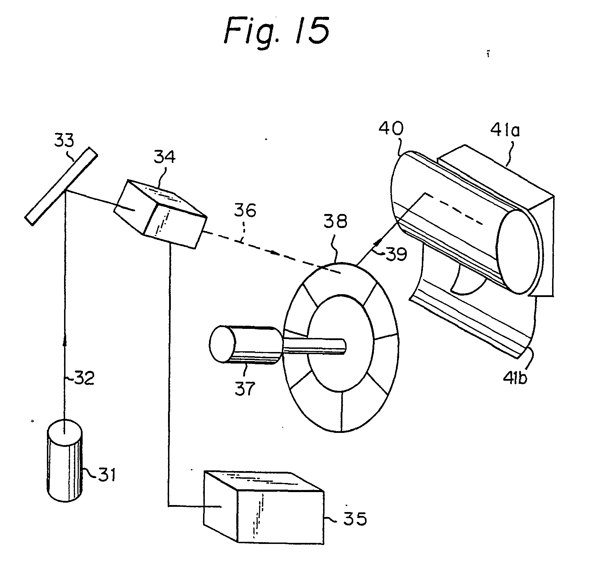

Figure 15 is a schematic illustration of a light beam scanning apparatus (hologram scanner) used as a laser printer. Referring to Fig. 15, reference numeral 31 denotes a laser source, 32 a reconstruction beam, 33 a mirror, 34 a light modulator, 35 a control unit, 36 a modulated reconstruction beam, 37 a motor as a shifting means, 38 a hologram disk, 39 a scanning beam, 40 a photo sensitive drum, 41a a developer, and 41b a printed sheet.

A hologram is arranged on the hologram disk 38 as shown by the methods in Figs. 8 and 9(A), (B), and 13. The hologram disk 38 is rotated by the motor 37 as a shifting means for the scanning beam. The reconstruction beam 32 emitted from the laser source 31 (having a freely adjustable wavelength) is reflected by the mirror 33 and then enters the light modulator 34. The light modulator turns the incident light beam ON or OFF in accordance with a control signal. The control signal is supplied from the control unit 35. The control unit 35 generates control signals corresponding to white and black patterns when an image to be printed is equally divided in the horizontal direction. The modulator 34 outputs the modulated reconstruction beam 36 by modulating the reconstruction beam 32 under the control signal.

As explained above, this output beam 36 is irradiated to the hologram disk 38 which is rotated by the motor 37. The rotation of the hologram disk 38 diffracts the modulated reconstruction beam 36 as the scanning beam 39, based on the above principles.

The scanning beam 39 scans in a straight line on the photo-sensitive drum 40. The photo-sensitive drum is sensitive to this beam and an electrostatic latent image is formed on its surface. The photo-sensitive drum 40 having the latent image on its surface rotates in the direction indicated by the arrow. The developer 41a develops and fixes the latent image on the printing sheet 41b on the drum. Thereby characters to be printed, as indicated by the control unit 35, are printed on the printing sheet 41b.

## Claims

1. An apparatus for producing a scanning light beam, comprising:
a rotatable disk (2, 11) having a hologram obtained by:
irradiating a reference wave light beam as a construction wave light beam having a diverging spherical wave front, from a first point light source ($f_1$) located at a predetermined distance ($f_A$) from the disk on the rotation axis thereof;
irradiating an object wave light beam of a first wavelength ($\lambda_1$) as a construction wave light beam having a diverging spherical wave front, from a second point light source ($f_2$) located at predetermined distances ($f_B$, R) from the disk and from the rotation axis; and causing interference between said reference wave light beam and said object wave light beam on said disk (2, 11) so as to form interference fringes on the disk;
the apparatus further comprising:
a light beam source (3), operable to generate a reconstruction beam (5);
and rotating means (1) for rotating the disk to produce a scanning light beam (6);

wherein said interference fringes have a spatial variation of spatial frequency including a minimum of rate of change of spatial frequency; and wherein

said light beam source (3) is operable to generate the reconstruction beam with a second wavelength ($\lambda$, $\lambda_2$) longer than the first wavelength, the first wavelength ($\lambda_1$) and the second wavelength ($\lambda$, $\lambda_2$) being such that a directly-usable straight-line scanning light beam (6) is obtained directly from the disk (2, 11), and the reconstruction beam being directed to points ($P_1$, $P_2$, $P_3$, $P_4$) on the disk at or in the vicinity of the minimum rate of change of spatial frequency.

2. An apparatus as claimed in claim 1, wherein the first and second point light sources ($f_1$, $f_2$) are arranged at the same predetermined distance from the plane of the disk (2, 11) and symmetrically with respect to a normal line (13) through the point ($P_4$) to which the reconstruction beam (5) is directed.

3. An apparatus as claimed in claim 1 or 2, wherein the light beam source (3) is operable to direct the reconstruction beam (5) along a direction independent of that of the object wave light beam or reference wave light beam, the angle of incidence of the reconstruction beam on the disk and the angle of diffraction being chosen so that:

$$\sin \theta_i = \frac{\lambda_2}{\lambda_1} \frac{r}{\sqrt{f_A^2 + r^2}}$$

and

$$\sin \theta_d = \frac{\lambda_2}{\lambda_1} \frac{R-r}{\sqrt{f_B^2 + (R-r)^2}}$$

4. An apparatus as claimed in any preceding claim, wherein the light beam source (3) for the reconstruction beam (5) comprises a semiconductor laser, the reference and/or object wave light beam being produced by an argon laser.

5. A laser printer comprising an apparatus as claimed in any preceding claim.

6. A method of producing a scanning light beam comprising:

forming a hologram on a rotatable disk (2, 11) by:

irradiating a reference wave light beam as a construction wave light beam having a diverging spherical wave front, from a first point light source ($f_1$) located at a predetermined distance ($f_A$) from the disk on the rotation axis thereof;

irradiating an object wave light beam of a first wavelength ($\lambda_1$) as a construction wave light beam having a diverging spherical wave front, from a second point light source ($f_2$) located at predetermined distances ($f_B$) from the disk and from the rotation axis;

causing interference between said reference wave light beam and said object wave light beam on said disk (2, 11), so as to form interference fringes on the disk;

directing a reconstruction beam onto the disk; and rotating the disk to produce the scanning light beam;

wherein said interference fringes have a spatial variation of spatial frequency, said variation including a minimum rate of change of spatial frequency; and wherein

the reconstruction beam has a second wavelength ($\lambda$, $\lambda_2$) longer than the first wavelength, the first wavelength ($\lambda_1$) and the second wavelength ($\lambda$, $\lambda_2$) being such that a directly-usable straight-line scanning light beam (6) is obtained directly from the disk (2, 11), the reconstruction beam being directed to a point ($P_1$, $P_2$, $P_3$, $P_4$) on the disk at or in the vicinity of the minimum rate of change of spatial frequency.

**Patentansprüche**

1. Vorrichtung zur Erzeugung eines Abtastlichtstrahls, mit:

einer rotierenden Scheibe (2, 11), die ein Hologramm hat, welches erhalten wurde durch:

Einstrahlen eines Referenzwellenlichtstrahls als ein Konstruktionswellenlichtstrahl, der eine divergierende sphärische Wellenfront hat, von einer ersten Punktlichtquelle ($f_1$), die in einem vorbestimmten Abstand ($f_A$) von der Scheibe auf der Rotationsachse derselben angeordnet ist;

Einstrahlen eines Objektwellenlichtstrahls von einer ersten Wellenlänge ($\lambda_1$) als einem Konstruktionswellenlichtstrahl, der eine divergierende sphärische Wellenfront hat, von einer zweiten Punktlichtquelle ($f_2$), die in einem vorbestimmten Abstand ($f_B$, R) von der Scheibe und von der Rotationsachse angeordnet ist; und Bewirken einer Interferenz zwischen dem genannten Referenzwellenlichtstrahl und dem genannten Objektwellenlichtstrahl auf der genannten Scheibe (2, 11), um so Interferenzstreifen auf der Scheibe zu bilden;

welche Vorrichtung ferner umfaßt:

eine Lichtstrahlenquelle (3), die betreibbar ist, um einen Rekonstruktionsstrahl (5) zu erzeugen;

und rotierende Einrichtungen (1) zum Rotieren der Scheibe, um einen abtastenden Lichtstrahl (6) zu erzeugen;

bei der die genannten Interferenzstreifen eine räumliche Variation von räumlicher Frequenz einschließlich einem Minimum einer Rate der Änderung der räumlichen Frequenz haben; und bei der

die genannte Lichtstrahlenquelle (3) betreibbar ist, um den Rekonstruktionsstrahl mit einer zweiten Wellenlänge ($\lambda$, $\lambda_2$) zu erzeugen, die größer als die erste Wellenlänge ist, wobei die erste Wellenlänge ($\lambda_1$) und die zweite Wellenlänge ($\lambda$, $\lambda_2$) derart sind, daß ein direkt verwendbarer, geradliniger abtastender Lichtstrahl (6) direkt von der Scheibe (2, 11) erhalten wird, und der Rekonstruktionslichtstrahl auf Punkte ($P_1$, $P_2$, $P_3$, $P_4$) auf der Scheibe bei oder in der Nähe der minimalen Rate der Änderung der räumlichen Frequenz gerichtet wird.

2. Vorrichtung nach Anspruch 1, bei der die genannten ersten und zweiten Punktlichtquellen ($f_1$, $f_2$) in demselben vorbestimmten Abstand von der Ebene der Scheibe (2, 11) und symmetrisch in Bezug auf eine senkrechte Linie (13) durch den Punkt ($P_4$) angeordnet sind, auf den der Rekonstruktionsstrahl (5) gerichtet ist.

3. Vorrichtung nach Anspruch 1 oder 2, bei der die Lichtstrahlenquelle (3) betreibbar ist, um einen Rekonstruktionsstrahl (5) längs einer Richtung zu lenken, die unabhängig von jener des Objektwellenlichtstrahls oder des Referenzwellenlichtstrahls ist, wobei der Einfallswinkel des Rekonstruktionsstrahls auf der Scheibe und der Winkel der Beugung so gewählt sind, daß:

$$\sin \theta_i = \frac{\lambda_2}{\lambda_1} \cdot \frac{r}{\sqrt{f_A{}^2 + r^2}}$$

und

$$\sin \theta_d = \frac{\lambda_2}{\lambda_1} \cdot \frac{R-r}{\sqrt{f_B{}^2 + (R-r)^2}}$$

4. Vorrichtung nach einem der vorhergehenden Ansprüche, bei der die genannte Lichtstrahlenquelle (3) für den Rekonstruktionsstrahl (5) einen Halbleiterlaser umfaßt, und der Referenz- und/oder Objektwellenlichtstrahl von einem Argonlaser erzeugt werden.

5. Laserdrucker mit einer Vorrichtung nach einem der vorhergehenden Ansprüche.

6. Verfahren zur Herstellung eines abtastenden Lichtstrahls mit:

Bilden eines Hologramms auf einer rotierbaren Scheibe (2, 11) durch:

Einstrahlen eines Referenzwellenlichtstrahls als ein Konstruktionswellenlichtstrahl, der eine divergierende sphärische Wellenfront hat, von einer ersten Punktlichtquelle ($f_1$), die in einem vorbestimmten Abstand ($f_A$) von der Scheibe auf der Rotationsachse derselben angeordnet ist;

Einstrahlen eines Objektwellenlichtstrahls von einer ersten Wellenlänge ($\lambda_1$) als einem Konstruktionswellenlichtstrahl, der eine divergierende sphärische Wellenfront hat, von einer zweiten Punktlichtquelle ($f_2$), die in einem vorbestimmten Abstand ($f_B$, R) von der Scheibe und von der Rotationsachse angeordnet ist; und Bewirken einer Interferenz zwischen dem genannten Referenzwellenlichtstrahl und dem genannten Objektwellenlichtstrahl auf der genannten Scheibe (2, 11), um so Interferenzstreifen auf der Scheibe zu bilden;

Richten eines Rekonstruktionsstrahls auf die Scheibe;

und Rotieren der Scheibe, um den abtastenden Lichtstrahl zu erzeugen;

wobei die genannten Interferenzstreifen eine räumliche Variation von räumlicher Frequenz haben, welche genannte Variation ein Minimum einer Rate der Änderung der räumlichen Frequenz einschließt; und wobei

der Rekonstruktionsstrahl eine zweite Wellenlänge ($\lambda$, $\lambda_2$) hat, die größer als die erste Wellenlänge ist, wobei die erste Wellenlänge ($\lambda_1$) und die zweite Wellenlänge ($\lambda$, $\lambda_2$) derart sind, daß ein direkt verwendbarer, geradliniger abtastender Lichtstrahl (6) direkt von der Scheibe (2, 11) erhalten wird, und der Rekonstruktionslichtstrahl auf Punkte ($P_1$, $P_2$, $P_3$, $P_4$) auf der Schiebe bei oder in der Nähe der minimalen Rate der Änderung der räumlichen Frequenz gerichtet wird.

**Revendications**

1. Appareil de production d'un faisceau lumineux en balayage comportant:

un disque disposé pour pouvoir tourner (2, 11) portant un hologramme obtenu

en projetant un faisceau lumineux d'onde de référence, comme un faisceau d'onde de construction ayant un front d'onde sphérique divergent, à partir d'une première source lumineuse ponctuelle ($f_1$) située à une distance prédéterminée ($f_A$) du disque sur son axe de rotation;

en projetant un faisceau lumineux d'onde d'objet d'une première longueur d'onde ($\lambda_1$), comme un faisceau lumineux d'onde de construction ayant un front d'onde sphérique divergent, depuis une seconde source lumineuse ponctuelle ($f_2$) située à des distances prédéterminées ($f_B$, R) du disque et de l'axe de rotation; et à produire une interférence entre ledit faisceau lumineux d'onde de référence et ledit faisceau lumineux d'onde d'objet sur ledit disque (2, 11) de manière à former des franges d'interférence sur le disque;

l'appareil comportant en outre:

une source de faisceau lumineux (3) ayant pour fonction de produire un faisceau de reconstitution (5);

et un dispositif de mise en rotation (1) destiné à faire tourner le disque pour produire un faisceau lumineux en balayage (6);

dans lequel lesdites franges d'interférence ont une variation spatiale de fréquence spatiale comprenant un minimum de taux de variation de fréquence spatiale; et dans lequel

ladite source de faisceau lumineux (3) a pour fonction de produire le faisceau de reconstitution avec une seconde longueur d'onde ($\lambda$, $\lambda_2$) plus grande que la première longueur d'onde, la première longueur d'onde ($\lambda_1$) et la seconde longueur d'onde ($\lambda$, $\lambda_2$) étant telles qu'un faisceau lumineux en balayage (6) linéaire, directement utilisable soit obtenu directement du disque (2, 11) et le faisceau de reconstitution étant dirigé vers des points ($P_1$, $P_2$, $P_3$, $P_4$) sur le disque aux taux minimal de variation de fréquence spatiale ou dans son voisinage.

2. Appareil selon la revendication 1, dans lequel la première et la seconde sources lumineuses ponctuelles ($f_1$, $f_2$) sont disposées à la même distance prédéterminée du plan du disque (2, 11) et symétriquement par rapport à une ligne normale (13) passant par le point ($P_4$) sur lequel est dirigé le faisceau de reconstitution (5).

3. Appareil selon la revendication 1 ou 2, dans lequel la source de faisceau lumineux (3) a pour fonction de diriger le faisceau de reconstitution (5) dans une direction indépendante de celle du faisceau lumineux d'onde d'objet ou de faisceau lumineux d'onde de référence, l'angle d'incidence du faisceau de reconstitution sur le disque et l'angle de diffraction étant choisis de manière què:

$$\sin \theta_i = \frac{\lambda_2}{\lambda_1} \cdot \frac{r}{\sqrt{f_A{}^2 + r^2}}$$

et

$$\sin \theta_d = \frac{\lambda_2}{\lambda_1} \cdot \frac{R-r}{\sqrt{f_B{}^2 + (R-r)^2}}$$

4. Appareil selon l'une quelconque des revendications précédentes, dans lequel la source de faisceau lumineux (3) pour le faisceau de reconstitution (5) consiste en un laser à semi-conducteur, le faisceau lumineux d'onde de référence et/ou d'objet étant produit par un laser à argon.

5. Imprimante à laser comprenant un appareil tel que revendiqué dans l'une quelconque des revendications précédentes.

6. Procédé de production d'un faisceau lumineux en balayage consistant:

à former un hologramme sur un disque disposé pour pouvoir tourner (2, 11),

en projetant un faisceau lumineux d'onde de référence comme un faisceau lumineux d'onde de construction ayant un front d'onde sphérique divergent, depuis une première source lumineuse ponctuelle ($f_1$) située à une distance prédéterminée ($f_A$) du disque, sur son axe de rotation;

en projetant un faisceau lumineux d'onde d'objet d'une première longueur d'onde ($\lambda_1$), comme un faiceau lumineux d'onde de construction ayant un front d'onde sphérique divergent, depuis une seconde source lumineuse ponctuelle ($f_2$) située à des distances prédéterminées ($f_B$) du disque et de l'axe de rotation;

en produisant une interférence entre ledit faisceau lumineux d'onde de référence et ledit faisceau lumineux d'onde d'objet sur ledit disque (2, 11) de manière à former des franges d'interférence sur le disque;

à diriger un faisceau de reconstitution sur le disque; et à faire tourner le disque pour produire le faiceau lumineux en balayage;

dans lequel lesdites franges d'interférence ont une variation spatiale de fréquence spatiale, ladite variation comprenant un taux minimal de changement de fréquence spatiale; et dans lequel

le faisceau de reconstitution a une seconde longueur d'onde ($\lambda$, $\lambda_2$) supérieure à la première longueur d'onde, la première longueur d'onde ($\lambda_1$) et la seconde longueur d'onde ($\lambda$, $\lambda_2$) étant telles qu'un faisceau lumineux (6) en balayage rectiligne directement utilisable soit obtenu directement du disque (2, 11), le faisceau de reconstitution étant dirigé vers un point ($P_1$, $P_2$, $P_3$, $P_4$) sur le disque au taux minimal de changement de fréquence spatiale ou dans son voisinage.

Fig. 1

Fig. 2

(A)　(B)

# Fig. 3

(A)

(B)

# Fig. 4

(A)

(B)

*Fig. 5*

$\pm 25 \mu$ m

$\Delta y$

$\Delta y$

71

7

*Fig. 6*

6

$\theta_d$

L

O

$P_1$

$r_0$

2

$\theta_i$

5

$\lambda$

7

*Fig. 7*

6

$\Delta y$

$\Delta \theta_d$

7

$\theta_d$

6'

L

O

$P_2$

$r_0 + \Delta r$

2

$\theta_i$

5

$\lambda$

*Fig. 8*

*Fig. 9*

(A)

(B)

EP 0 122 783 B1

Fig. 10

Fig. 11

*Fig. 12*

*Fig. 13*

6

## Fig. 14

## Fig. 15